# NEUE EUROPÄISCHE PATENTSCHRIFT

(11) **EP 2 493 039 B2**
(45) Veröffentlichungstag und Bekanntmachung des Hinweises auf die Entscheidung über den Einspruch: **29.11.2017**
(45) Hinweis auf die Patenterteilung: 23.10.2013
(21) Anmeldenummer: 12001198.6
(22) Anmeldetag: 23.02.2012
(51) Int. Cl.: H02G 3/04, H02G 3/18, H02G 9/02

(54) **Kabelschutz an einer Schachtabdeckung**
Cable guard on a box cover
Protection de câble sur un couvercle de caisse

(30) Priorität: 28.02.2011 DE 102011012628
(43) Veröffentlichungstag der Anmeldung: 29.08.2012
(73) Patentinhaber: Mrozek, Uwe, 40668 Meerbusch (DE)
(72) Erfinder: Mrozek, Uwe, 40668 Meerbusch (DE)
(74) Vertreter: Cohausz Hannig Borkowski Wißgott

(56) Entgegenhaltungen:
- BE-A- 731 863
- CH-B1- 698 198
- JP-A- 5 326 064

## Beschreibung

Die Erfindung betrifft eine Vorrichtung zum Schutz eines aus einer abgedeckten Boden-, Wand, Fahrzeug- oder Säulenöffnung austretenden Kabels, Schlauchs, Rohres, Seiles oder Drahtes gegen Beschädigung insbesondere beim Überfahren oder Überschreiten der seitlichen Austrittsöffnung, aus der das Kabel, der Schlauch, das Rohr, das Seil oder der Draht austritt.

Aus der DE 72 18 366 U und der DE 16 90 256 A sind Schutzkappen für die obere Öffnung eines elektrische Anschlüsse aufweisenden Schachtes bekannt. Solche Auslassöffnungen am Deckel eines Schachtes haben den Nachteil, dass die Kabel oder Schläuche an einem Kantenbereich vorbeigeführt werden müssen. Dadurch können Personen/Fahrzeuge die Kabel oder Schläuche an dieser Kante eindrücken/abscheren. Personen- und/oder Sachschäden können hierdurch die Folge sein. Zudem wird hierdurch eine wünschenswerte Anlagenverfügbarkeit nicht gewährleistet.

Aus der EP 2 256 889 A2 ist eine Einbaudose mit einem Deckel bekannt, dessen für die Kabel vorgesehene Austrittsöffnung durch ein Deckelteil verschließbar ist, das am Deckel angelenkt und nach oben veschwenkbar ist. Beim Überfahren oder Überschreiten des Deckels klemmt der vordere Rand des Deckelteils das Kabel ab, so dass es gequetscht und verletzt wird.

Aus der CH 698 198 B1 ist eine Bodendose mit einem oberen Deckel bekannt, deren Kabelaustrittsöffnung durch eine Schutzkappe aus Blech abgedeckt ist, die zum Herausstellen verschoben wird. Zum einen ist diese Schutzkappe wenig belastbar und zum anderen entsteht nach dem Verschieben hinter der Anlenkstelle eine Öffnung, durch die Teile in die Bodendose fallen können.

Aus der BE 731 863 ist ein Blendrahmen mit Deckel für eine Unterflurgerätedose bekannt bei der die Kabelausführung ein Verschlussstück aufweist, das in zwei verschiedenen Stellungen jeweils um 180 Grad verdreht einschiebbar ist, um in einer Stellung die Kabelausführung freizugeben und in einer zweiten Stellung zu verschließen.

Aufgabe der Erfindung ist es, eine Vorrichtung der eingangs genannten Art so zu verbessern, dass das aus der Boden-, Wand, Fahrzeug- oder Säulenöffnung austretende Kabel, Schläuche oder Rohre gegen Beschädigungen gesichert sind, insbesondere auch dann, wenn größere Druck- oder Scherkräfte von oben oder seitlich ausgeübt werden, wobei eine die Boden-, Wand, Fahrzeug- oder Säulenöffnung abdeckende Schutzkappe bei geschlossener Austrittsöffnung sicher verwahrt ist.

Diese Aufgabe wird erfindungsgemäß dadurch gelöst,
- dass die seitliche Austrittsöffnung von einer haubenförmigen Schutzkappe überdeckt ist, die eine seitliche Öffnung für das Kabel, den Schlauch, das Rohr, das Seil oder der Draht aufweist und mit ihrem unteren Rand sich auf dem oberen Rand der seitlichen Austrittsöffnung und/oder der Boden-, Wand, Fahrzeug- oder Säulenöffnung abstützt,
- wobei die Schutzkappe an dem die Boden-, Wand, Fahrzeug- oder Säulenöffnung bildenden Schacht oder Kasten oder an der die Boden-, Wand, Fahrzeug- oder Säulenöffnung verschließenden Abdeckung insbesondere Deckel angelenkt ist,
- wobei die Schutzkappe in einer nach unten verschwenkten Stellung in dem Raum unterhalb der Abdeckung oder in einer seitlichen Erweiterung des Raumes unterhalb der Abdeckung einliegt,
- wobei an der Schutzkappe (8) ein Deckelbereich (11) befestigt ist, durch den bei nach unten verschwenkter Schutzkappe (8) die seitliche Austrittsöffnung (7) verschließbar oder abdeckbar ist, und i
- wobei die Schutzkappe (8) und der Deckelbereich (11) einen zweiarmigen Hebel bilden.

Das entwickelte Schutzsystem dient zum Schutz von insbesondere zeitweiligen Boden-, Wand, Fahrzeug- oder Säulenöffnungen, die für die Entnahme von elektrischen Kabeln, Schläuchen, Glasfaserkabeln, Seilen, Druckluft und klimatisierter Luft und anderen flexiblen Zuführurigssystemen gedacht sind.

Das System ist vollkommen mit der zu öffnenden Einrichtung integriert, so dass sich das System im geschlossenen Zustand durch eine befüllbare Deckelwanne an die Umgebung anpassen kann und dadurch weitgehend unsichtbar ist.

Im aktiven Betriebszustand wird daher die integrierte und dadurch unverlierbare Schutzkappe über die Boden, Wand, Fahrzeug- oder Säulenöffnung ausgeklappt. Durch ihre konisch zulaufende Form ist die Schutzkappe im ausgeklappten Zustand größer als die Auslassöffnung, überdeckt diese und liegt auf dem umgebenden Boden bzw. Fläche auf. Die Schutzkappe ist von drei Seiten schräg angepasst und überlappt den kritischen Kantenbereich der Öffnung. Sie bietet daher Personen und Fahrzeugen Sicherheit beim Betreten oder Überfahren und keine Angriffspunkte zum Abscheren. An der Öffnungsseite können ggf. übergangslos flexible Kabelbrücken etc. bis zum Verbraucher gelegt werden.

Da die Schutzkappe im passiven Betrieb in die Einheit geklappt wird, gibt es keine Größenbegrenzungen für die Schutzkappe und sie kann bis zur maximalen Traglast des Öffnungssystems ausgeführt werden. Die Unterflursysteme/ Boden-, Wand, Fahrzeug- oder Säulenöffnungen und die Auslassöffnung sind auch im Betriebszustand geschlossen bzw. überbrückt und sind damit jederzeit in einem sicheren und auch überfahrbaren Zustand mit der durchgängigen Traglast.

Ein einfaches Inbetriebsetzen und Entfernen der Schutzkappe wird dadurch erreicht, dass die Schutzkappe an dem die Boden-, Wand, Fahrzeug- oder Säulenöffnung bildenden Schacht öder Kasten oder an der die Boden, Wand, Fahrzeug- oder Säulenöffnung verschließenden Abdeckung insbesondere Deckel angelenkt ist. Hierbei ist von Vorteil, wenn die Schutzkappe in eine untere Stellung verschwenkbar ist, in der die Schutzkappe nach oben über die Abdeckung nicht vorsteht und außer Funktion ist, und in die obere Funktionsstellung verschwenkbar ist.

Vorzugsweise wird vorgeschlagen, dass der Deckelbereich die Form einer Wanne besitzt, die die seitliche Erweiterung abdeckt, wenn die Schutzkappe sich in der unteren Stellung befindet. Ferner kann der Deckelbereich verschieblich an der Abdeckung gelagert sein. Ferner sollten die Abdeckung des Raumes die Form einer nach oben offenen Wanne aufweisen. Die Form einer Wanne führt zu dem Vorteil, dass die Wanne insbesondere durch Beton, Mörtel oder einen Belag ausgefüllt werden kann, so dass der obere Bereich wenig sichtbar ist.

Ein Ausführungsbeispiel der Erfindung ist in den Zeichnungen schematisch in senkrechten Schnitten dargestellt und wird im Folgenden näher beschrieben. Es zeigen
- Fig. 1 bis 4: ein erstes Ausführungsbeispiel von der Position der Schutzkappe von außer Funktion in Fig. 1 bis in Funktion in Fig. 4,
- Fig. 5: die Schutzkappe in Funktion in perspektivischer Darstellung.

Ein in den Boden 1, eine Wand, ein Fahrzeug oder eine Säule eingelassener Senkkasten 2 bildet einen Raum 3 insbesondere Kabelschacht, dessen obere Öffnung (Bodenöffnung 4) durch eine waagerechte Abdeckung bzw. Deckel 5 verschließbar ist. Vorzugsweise ist der Deckel 5 am Rahmenprofil 6 des Senkkastens angelenkt.

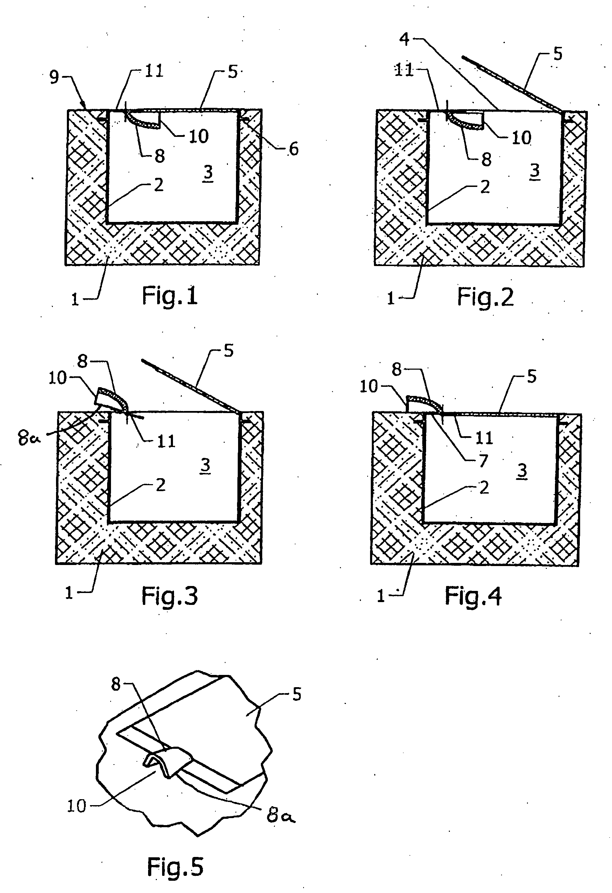

Die Abdeckung bzw. der Deckel 5 bildet am Rand eine seitliche Austrittsöffnung 7, durch die im Raum 3 bzw. Schacht befindliche Kabel, Schläuche, Rohre, Seile oder Drähte nach außen geführt werden können. Würden diese Kabel, Schläuche, Rohre, Seile oder Drähte ungeschützt nach außen geführt werden, so würden sie an der Kante des Rahmenprofils 6 gequetscht werden, sobald Druck von oben durch ein Fahrzeug oder durch Personen ausgeübt wird. Um dies zu verhindern, ist eine haubenförmige Schutzkappe 8 am Rahmenprofil 6 in der Weise angelenkt, dass sie bei Nichtbenutzung unterhalb des Deckels 5 liegt und nach einem nach Obenschwenken die Position nach Fig. 4 einnimmt, so dass sie die Austrittsöffnung 7 überdeckt und hierbei sich mit ihrem unteren Rand 8a auf der Oberseite des Bodens bzw. Fläche 9 abstützt. Hierbei besitzt die Schutzkappe 8 eine seitliche, senkrechte Öffnung 10, durch die die Kabelschläuche oder Rohre nach außen austreten. Durch diese sichere Abstützung der Schutzkappe 8 kann diese erhebliche Druck- und Scherkräfte abfangen.

An der Schutzkappe 8 ist ein Deckelbereich 11 angeformt, der sich auf der anderen Seite der Drehachse der Schutzkappe befindet, so dass Deckelbereich 11 und Schutzkappe 8 einen zweiarmigen Hebel bilden und bei nach unten geschwenkter Schutzkappe 8 der Deckelbereich 11 die Austrittsöffnung 7 verschließt, wie in Fig. 1 dargestellt.

Die Schutzkappe 8 ist, wie in der ersten Ausführung gezeigt, mit dem Abdeckteil 13 als eine Einheit ausgeführt. Diese Einheit kann sich dann um eine Achse, die an der Vorderseite des Deckels angebracht ist, komplett drehen, so dass entweder die Schutzkappe 8 oder das Abdeckteil 13 die Austrittsöffnung verschließt. Der Vorteil hierbei ist, dass die Schutzkappe 13 nun als Wannenkörper ausgeführt werden kann und mit dem gleichen Belag wie die Umgebung befüllbar ist. Hierdurch passt sich die Austrittsöffnung an die Umgebung an und ist dadurch weitestgehend unsichtbar.

Die Schutzeinrichtung gewährleistet weiterhin eine zwangsläufige Sicherung der Austrittsöffnung, da der Anwender entweder mit der Schutzkappe 8 oder mit dem Abdeckteil 13 die Austrittsöffnung schützen muss.

Die Schutzeinrichtung gewährleistet einen zwangläufigen Schutz, da der Anwender nicht in der Lage ist, seine Kabel, Schläuche, Seile, Drähte oder Rohre durch die Austrittsöffnung zu führen, ohne die Schutzkappe einzusetzen. Gleichzeitig gewährleistet sie jederzeit einen Schutz der Austrittsöffnung, da entweder die Schutzkappe 8 oder das Abdeckteil 13 zwangläufig eingesetzt werden muss.

Die erfindungsgemäße Konstruktion ist auch bei einer Fahrzeugöffnung anwendbar, d. h. bei einem von einem Deckel abgedeckten Raum, der einen Tankstutzen oder einen Elektroanschluss aufweist. Hierbei ist der Raum entweder von außen zugänglich, so dass die Fläche 9 von der Außenseite insbesondere von der Außenfläche des Kraftfahrzeugs gebildet wird, oder die Öffnung/der Raum 3 befindet sich innerhalb des Kraftfahrzeugs, vorzugsweise im Koffer- oder Motorenraum.

## Patentansprüche

1. Vorrichtung zum Schutz eines aus einer abgedeckten Boden-, Wand, Fahrzeug- oder Säulenöffnung (4) austretenden Kabels, Schlauchs, Rohres, Seiles oder Drahtes gegen Beschädigung insbesondere beim Überfahren oder Überschreiten der seitlichen Austrittsöffnung (7), aus der das Kabel, der Schlauch, das Rohr, das Seil oder der Draht austritt, wobei die seitliche Austrittsöffnung (7) von einer haubenförmigen Schutzkappe (8) überdeckt ist, die eine seitliche Öffnung (10) für das Kabel, den Schlauch, das Rohr, das Seil oder der Draht aufweist und mit ihrem unteren Rand (8a) sich auf dem oberen Rand der seitlichen Austrittsöffnung (7) und/oder der Boden-, Wand, Fahrzeug- oder Säulenöffnung (4) abstützt, wobei die Schutzkappe (8) an dem die Boden-, Wand, Fahrzeug- oder Säulenöffnung bildenden Schacht oder Kasten (2) oder an der die Boden-, Wand, Fahrzeug- oder Säulenöffnung (4) verschließenden Abdeckung (5) insbesondere Deckel angelenkt ist,
• wobei die Schutzkappe (8) in einer nach unten verschwenkten Stellung in dem Raum (3) Unterhalb der Abdeckung (5) oder in einer seitlichen Erweiterung (12) des Raumes (3) unterhalb der Abdeckung (5) einliegt,
• wobei an der Schutzkappe (8) ein Deckelbereich (11) befestigt ist, .durch den bei nach unten verschwenkter Schutzkappe (8) die seitliche Austrittsöffnung (7) verschließbar oder abdeckbar ist, und
• wobei die Schutzkappe (8) und der Deckelbereich (11) einen zweiarmigen Hebel bilden.

2. Vorrichtung nach Anspruch 1, **dadurch gekennzeichnet, dass** die Schutzkappe (8) in eine untere Stellung verschwenkbar ist, in der die Schutzkappe (8) nach oben über die Abdeckung (5) nicht vorsteht und außer Funktion ist, und in die obere Funktionsstellung verschwenkbar ist.

3. Vorrichtung nach Anspruch 1 oder 2, **dadurch gekennzeichnet, dass** die seitliche Erweiterung (12) oben durch ein Abdeckteil (13) bedeckt und/oder ausgefüllt ist, das entfernbar ist.

4. Vorrichtung nach einem der vorherigen Ansprüche, **dadurch gekennzeichnet, dass** der Deckelbereich (11) die Form einer Wanne besitzt, die die seitliche Erweiterung (12) abdeckt, wenn die Schutzkappe (8) sich in der unteren Stellung befindet.

5. Vorrichtung nach einem der vorherigen Ansprüche, **dadurch gekennzeichnet, dass** der Deckelbereich (11) verschieblich an der Abdeckung (5) gelagert ist.

6. Vorrichtung nach einem der vorherigen Ansprüche, **dadurch gekennzeichnet, dass** die Abdeckung (5) des Raumes (3) die Form einer nach oben offenen Wanne aufweist.

## Claims

1. Device for protecting a cable, hose, pipe, rope or wire emerging from a covered opening (4) in a floor, wall, vehicle or pillar from damage, in particular when the lateral outlet opening (7) through which the cable, hose, pipe, rope or wire emerges is driven over or stepped upon, wherein
the lateral outlet opening (7) is covered by a hood-shaped protective cap (8) which has a lateral opening (10) for the cable, hose, pipe, rope or wire and which is supported by its lower edge (8a) on the upper edge of the lateral outlet opening (7) and/or of the opening (4) in the floor, wall, vehicle or pillar, **characterised in that**
• the protective cap (8) is hinged to the edge of the opening (4) in the floor, wall, vehicle or pillar, to the shaft or casing (2) forming the opening in the floor, wall, vehicle or pillar, or to the covering (5), in particular cover, occluding the opening (4) in the floor, wall, vehicle or pillar, and **in that**
• in a swivelled-down position the protective cap (8) lies inside the space (3) below the covering (5) or in a lateral extension (12) of the space (3) below the covering (5),
• a cover portion (11), by which the lateral outlet opening (7) can be occluded or covered when the protective cap (8) is swivelled down, is fastened to the protective cap (8),
• protective cap (8) and cover portion (11) form a two-armed lever.

2. Device according to Claim 1, **characterised in that** the protective cap (8) can be swivelled to a lower position in which the protective cap (8) does not project upwardly above the covering (5) and is inoperative, and can be swivelled to the upper operative position.

3. Device according to Claim 1 or 2, **characterised in that** the lateral extension (12) is covered and/or filled in at the top by a covering part (13) which is removable.

4. Device according to any one of the preceding claims, **characterised in that** the cover portion (11) has the shape of a trough which covers the lateral extension (12) when the protective cap (8) is in the lower position.

5. Device according to any one of the preceding claims, **characterised in that** the cover portion (11) is mounted displaceably on the covering (5).

6. Device according to any one of the preceding claims, **characterised in that** the covering (5) of the space (3) has the shape of a pan open at the top.

## Revendications

1. Dispositif de protection d'un câble, tuyau flexible, tube, corde ou fil, sortant d'une ouverture recouverte (4) de sol, de paroi, de véhicule ou de colonne, contre un risque de détérioration, en particulier lors de la traversée ou du franchissement de l'ouverture de sortie latérale (7), dont sort le câble, le tuyau flexible, le tube, la corde ou le fil, l'ouverture de sortie latérale (7) étant recouverte d'un capuchon de protection (8) en forme de capot, qui présente une ouverture latérale (10) pour le câble, le tuyau flexible, le tube, la corde ou le fil, et s'appuie par son bord inférieur (8a) sur le bord supérieur de l'ouverture de sortie latérale (7) et/ou de l'ouverture (4) de sol, de paroi, de véhicule ou de colonne, **caractérisé en ce que**
• le capuchon de protection (8) s'articule sur le bord de l'ouverture (4) de sol, de paroi, de véhicule ou de colonne, sur la gaine ou caisson (2), formant l'ouverture de sol, de paroi, de véhicule ou de colonne, ou sur le recouvrement (5), en particulier couvercle, fermant l'ouverture (4) de sol, de paroi, de véhicule ou de colonne, et
• que le capuchon de protection (8) s'insère, dans une position de pivotement vers le bas, dans l'espace (3) sous-jacent au recouvrement (5) ou dans un élargissement latéral (12) de l'espace (3) sous-jacent au recouvrement (5),
• une zone de couvercle (11) est fixée sur le capuchon de protection (8), zone par laquelle l'ouverture de sortie latérale (7) peut être fermée ou recouverte en position de pivotement vers le bas du capuchon de protection (8),
• le capuchon de protection (8) et la zone de couvercle (11) forment un levier à deux bras.

2. Dispositif selon la revendication 1, **caractérisé en ce que** le capuchon de protection (8) est apte à pivoter dans une position inférieure, dans laquelle le capuchon de protection (8) ne dépasse pas vers le haut du recouvrement (5) et est hors fonction, et est apte à pivoter dans une position de fonctionnement supérieure.

3. Dispositif selon l'une des revendications 1 et 2, **caractérisé en ce que** l'élargissement latéral (12) est couvert et/ou rempli en partie haute d'un élément de recouvrement (13), qui peut être retiré.

4. Dispositif selon l'une des revendications précédentes, **caractérisé en ce que** la zone de couvercle (11) présente la forme d'une cuve, qui recouvre l'élargissement latéral (12), lorsque le capuchon de protection (8) se situe dans la position inférieure.

5. Dispositif selon l'une des revendications précédentes, **caractérisé en ce que** la zone de couvercle (11) est montée mobile sur le recouvrement (5).

6. Dispositif selon l'une des revendications précédentes, **caractérisé en ce que** le recouvrement (5) de l'espace (3) présente la forme d'une cuve ouverte vers le haut.
